# EUROPEAN PATENT APPLICATION

(11) **EP 1 887 510 A1**
(43) Date of publication of application: **13.02.2008**
(21) Application number: 07253081.9
(22) Date of filing: 06.08.2007
(51) Int. Cl.: G06Q 40/00

(54) **Business development company for (healthcare) technology investment**

(30) Priority: 04.08.2006 US 835461 P
(71) Applicant: X-Shares Advisors LLC, New York, NY 10170 (US)
(72) Inventor: Feldman, Jeffrey L., Princeton New Jersey 08540 (US)
(74) Representative: Maury, Richard Philip

(57) **Abstract**

A business development corporation (BDC) is formed according to novel selection methods which organize investment according to investor definitions of technology application. For example, healthcare companies can be organized according to their involvement with particular therapeutic and diagnostic areas.

## Description

### Reference to Related Application

The present application discloses subject matter similar to that of WO 2005/072357 A2, and to that of U.S. Patent Application No. 11/476,830, whose disclosures are hereby incorporated by reference in their entireties into the present disclosure. Except as explicitly disclosed herein, the present invention can be implemented like that disclosed in either of the above identified applications.

### Field of the Invention

The present invention relates to the selection of portfolios and their management and more particularly to a system and method for investing in a 'vertical' market sector in healthcare or other research-intensive fields, to synthesize a business development corporation. The present invention has general applicability to forming investment vehicles.

### Description of Related Art

Portfolio investing is generally considered to mitigate risk. Various methodologies for selection of elements of a portfolio as well as allocation of resources and maintenance have been developed and are in widespread use. Numerous strategies are described in an extensive body of literature and practiced broadly in the fund management industry. It is common practice to create, using various selection strategies, field or sector-specific investment portfolios. Such portfolios require classification within the sector from which companies are drawn according to generally agreed upon criteria. As examples, portfolios may be drawn from 'the financial sector', 'manufacturing', transportation, energy, defense, healthcare, mining and so forth. The rationale for such structuring of investment choices generally is related to what are believed to be shared attributes / responses of companies grouped within such portfolios. Within such broad classifications, it is also common to create sub-groupings according to attributes such as 'product', end-user, technology base etc.. The terms 'vertical' and 'horizontal' are often used to characterize markets which in the first instance are particular to a cluster of companies selected according to basic technology and end-user (such as supply chain companies in relation to the energy sector) and in the second instance are related to sector characteristics of companies (such as energy retailers). It is obvious that the designation of axes is an arbitrary but useful convention.

Managed investment vehicles known in the art include but are not limited to UITs (unit investment trusts) ETFs (exchange traded funds), private equity funds such as venture investment pools, mutual funds etc.. Generally, such vehicles allow investors to buy small pieces of the vehicle as "units" or shares. A purchaser of such units or shares seeks to gain from professional management of the vehicle and the ability to diversify on a relatively small scale. Managed investment vehicles may be listed on an exchange and trade just like stocks. They are not usually a vehicle for capital formation but rather a derivative investment. However they may also be used for capital formation. In creating such vehicles, segmentation of the universe of possible investments is commonly used to attempt differentiation of the vehicle for marketing purposes as well as portfolio structure and management knowledge and expertise.

Since the advent of mutual funds, all portfolio investing has been horizontal That is, stocks have been chosen across a broad landscape (S&P 500, Russell 2000, etc) encompassing many industries. In the past few years, we have seen the development of "sector funds" which invest across one industry (energy, telecom, utilities, etc.). Since 2004, Powershares has introduced a number of sector specific Exchange Traded Funds for industries such as Alternative Energy and Food and beverage (see www.powershares.com for a complete list). Powershares has also introduced several "Style" ETFs ( small cap, mid cap. dividend payers, growth, etc.).

### Summary of the Invention

The present invention can be differentiated from the above in two ways. First of all, the present invention takes the healthcare industry and sub-divides it into sectors such that, when taken together, the sectors represent most of the therapeutic and diagnostic activity in the industry. So the parts add up to the whole, so to speak. But now an investor has the ability to emphasize one therapeutic area over another and to trade (or hedge) one aspect of healthcare against another. Better diagnosis will mean less expensive therapy, so it might be appropriate to be "long diagnostics" and "short therapeutics." By dividing an entire industry into its parts (the indexes) we create portfolios that are tools for investors as well as absolute investment vehicles.

The second way in which the present invention is differentiated is that the vertical concept is expanded further. Business Development Companies are created, which will be publicly registered and traded, which will invest in smaller public companies and private companies. These BDCs will be themed in the same way as the ETFs described in the above-cited PCT application. The ETFs have the more established companies in their portfolios while the BDCs include companies that have, potentially, the next generation of products. After they are in existence, we will create seed stage funds in which, by virtue of our analysis of the ETF and the BDC, we will offer funds to companies who are engaged in activities that are complimentary or evolutionary to the existing portfolios.

If ETFs had existed in the 90's during the telecom and internet bubble, it would have been possible to invest in a basket of search engines, hosting companies, "B to B" companies, ISPs, etc. instead of the widespread one-off speculation that took place. If one of the baskets got overheated, it would have been possible to short that basket. In fact, if ETFs had existed during the 90's, it is likely there would not have been a bubble. Further, if there are dozens of companies doing the same thing (online pet food sales for example), that would be apparent in the ETF and one would not put such companies into the BDC or the seed stage fund. This vertical style allows for exposure to innovation and mitigation of risk and a far more efficient allocation of capital.

This style of investing is appropriate to any industry that is experiencing rapid technological change. Obviously, in a mature and staid industry where little change is taking place, there is little point to this strategy.

But in healthcare, energy, telecom, the internet, transportation, education and several other industries, this strategy creates an efficient context for the creation of new entities and the funding of new ideas.

Examples of verticals are cardiology, which includes diseases like stroke and arteriosclerosis, or Metabolic-Endocrine, which includes diseases like diabetes and obesity.

The BDC's of the present invention can differ from the ETF's of the above-cited PCT application in the following respect, which should be construed as illustrative rather than limiting. The ETFs invest in public companies which offer the current treatments in a therapeutic area, as well as having products in late stage trials which could be commercialized in 1 to 3 years. The Business Development Companies (which may also be publicly traded limited partnerships) invest in companies with products in earlier stages of development that are unlikely to become commercial for 3 to 7 years. These may be public or private companies. The BDCs will be organized along the same therapeutic areas as the ETFs. If the products are successful, the company will "graduate" to the ETF. In other words, there is always a ready liquid market for the second generation companies, if their products are successful. Also, the ETF defines the current state of the art and provides a context for second generation investments. Once the ETFs and BDCs are trading and appropriately capitalized, we will create Seed Stage private partnerships. Experts will be impaneled in each therapeutic area to look at the current state of treatment (ETFs), the second generation products in development (BDCs) and decide what aspects of research are necessary to advance therapy (and or cure) most efficiently. The seed stage capital will be used to invest in such opportunities if they exist, or to start new companies if necessary.

The NIH doles out over $25 billion in grants to over 200,000 researchers each year. These are done without any context or rationale. There is no infrastructure to assist these grantees should they happen upon something valuable. The existence of the vertical structure serves as a capital funnel to create efficiencies by allowing a researcher to seek funds in the appropriate therapeutic area.

### Brief Description of the Drawings

A preferred embodiment of the invention will be described in detail with reference to the drawings, in which:

Fig. 1 shows a flow chart for forming an investment vehicle according to the preferred embodiment;

Fig. 2 shows a schematic diagram of a system for implementing the preferred embodiment; and

Fig. 3 shows a flow chart for weighting and rebalancing the securities in the investment vehicle according to the preferred embodiment.

### Detailed Description of the Preferred Embodiment

A preferred embodiment of the present invention will be set forth in detail with reference to the drawings, in which like reference numerals refer to like elements throughout.

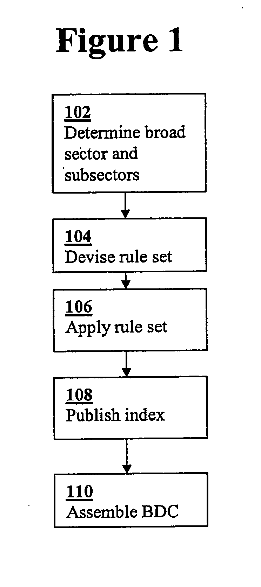

The preferred embodiment will be explained with reference to the flow chart of Fig. 1. In step 102, the analyst determines how the broad sector at hand (i.e. health care; financial services; energy, etc.) can be logically broken down into subsectors that have their own distinct economic utility (in the case of health care - therapeutics, diagnostics, and devices, for instance). The subsectors are further refined by identifying a specific economic utility that can be identified as a universal characteristic of a particular vertical. In the case of therapeutics, the inventor has identified twelve areas that combine a large enough economic scale with sufficient commonality of goal (i.e. cancer) to qualify as a specific vertical. This concept can then identify a company as belonging to a vertical regardless of size - i.e. a company like Genzyme, with a market cap of $17 billion, is equally a part of a cancer vertical as a small private company with two scientists in a rented lab.

By way of analogy, the invention identifies economic rivers all the way to their source (the Mississippi and all its tributaries) rather than by amount of flow (all rivers with flow of x million cubic feet per second).

In step 104, a rule set is devised that provides an objective determination for assigning a company to a particular vertical. Our therapeutic rule set uses number of clinical trials and products marketed as the primary determinants of what a company "is".

In step 106, the rule set is applied by an independent calculation agent (in our case Standard & Poor's), to produce an index of companies reflective of the vertical. Our rule set also includes capital market screens to ensure compliance with SEC and exchange regulations.

In step 108, the index is published as a real life representation of a vertical. Our indices are being distributed through Reuters.

In step 110, the BDC is then assembled using the blueprint provided by the vertical index, which means that large aggregations of the index components ("creation units") are exchanged for shares of the new BDC, which then trades like a stock.

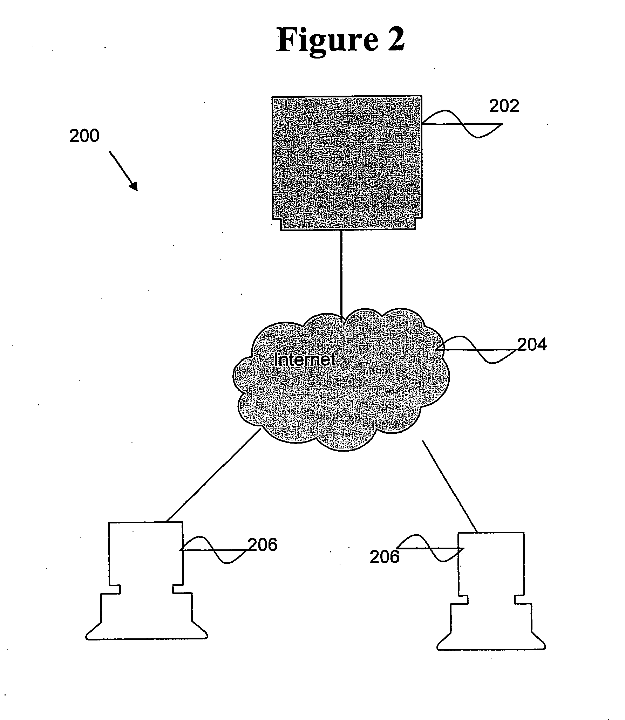

A suitable trading system is shown in the schematic diagram of Fig. 2, although any other suitable trading system can be used instead of, or in addition to, the system 200 of Fig. 2. In the system 200, trading information concerning the investment vehicles is loaded onto a server 202, which is accessible over the Internet 204 by traders using personal computers 206 from their homes or offices, or any other suitable Internet access devices, e.g., third-generation cellular telephones. In particular, the system 200 of Fig. 2 has utility in carrying out steps 102 and 104 of Fig. 1, in which case the server 202 can be configured to implement the required database searching capability. The specifics of the technological implementation of such a system 200 are known in the art and will therefore not be described in detail here.

The following are examples of funds which can be realized within the scope of the invention. Of course, the following list is illustrative rather than limiting.
- Diagnostics Index Fund
- Respiratory/Pulmonary Index Fund
- T-Cancer Index Fund
- M-Cancer Index Fund
- Derma And Wound Care Index Fund
- Ophthalmology Index Fund
- Infectious Disease Index Fund
- Metabolic-Endocrine Disorders Index Fund
- Autoimmune-Inflammation Index Fund
- Central Nervous System Index Fund
- Cardiology Index Fund
- Gastrointestinal/Genitourinary/Gender Health Index Fund

As noted previously, the above funds, and any others which may be formed within the scope of the invention, are based on indices. Those indices (individually, an "Index" and collectively, the "Indices") are designed to serve as benchmarks for tracking various subsectors of the health care, life sciences, and biotechnology sectors of the economy and serve primarily as:
1) Performance benchmark for portfolio managers and investors who invest in the securities of these companies;
2) Performance yardsticks for companies in these sectors;
3) Vehicles for directing attention to the growing importance of the Life Sciences in the US and global economy; and
4) Continuous indicators for developments in the Health Care, Biotechnology, and Life Sciences markets.

The Indices are comprised of public securities of issuers whose business lies in the health care, biotechnology, or life sciences sectors of the economy and which are selected pursuant to certain specific, objective criteria enumerated below, including securities of US and Canadian companies and securities of international companies with depositary receipts in either American (ADR) or global (GDR) form. Such securities must be listed for trading on one of the major US exchanges (The New York Stock Exchange (NYSE), The American Stock Exchange (AMEX) or The Nasdaq Stock Market (NASDAQ)) or on a major Canadian stock exchange, in order to be included in an Index. Decisions regarding additions to and removals from each individual Index are made by an index administrator, typically on a quarterly basis, as discussed below. In addition to meeting certain objective criteria, securities are also evaluated as described further below to ensure their overall consistency with the character, design, and purpose of the Indices. This evaluation is conducted by a policy steering committee.

Component securities within each individual Index are initially equal weighted and are rebalanced, typically quarterly, as described below. The Indices are denominated in US dollars.

To be eligible for inclusion in an Index, component securities must be issued by a company whose business lies in the healthcare, life sciences, or biotechnology sectors of the US, Canadian or global economy in one of the three following general divisions: (a) therapeutics; (b) business activities focused in healthcare, life sciences or biotechnology; or (c) enabling tools and technologies for use in healthcare, life sciences or biotechnology.

Only common equity securities are eligible for inclusion in the Indices. Debt or quasi-debt securities, such as convertible securities, are not eligible.

Securities must meet the following conditions to be eligible for inclusion in an Index.

First, the issuer must be a publicly traded company with securities listed on a major (NYSE, Amex, NASDAQ) U.S. or Canadian Exchange, or if not so listed, have ADRs or GDRs listed on one of the exchanges above.

Second, the issuer must have a market capitalization greater than $100 million and less than $10 billion for at least two of the three preceding quarters.

Third, a therapeutically oriented company must be listed on either BioCentury's (www.biocentury.com) or MedTrack's (www.medtrakservices.com) database as providing products in the relevant therapeutic category corresponding to the component security's subject Index or any potentially eligible company must have been described as possessing the characterization of this subject Index (for example, Company X must have been classified or described by BioCentury or MedTrack as a diagnostics company in order to be eligible for consideration for inclusion in the FW Diagnostics Index).

Fourth, for therapeutic categories only, an issuer must meet any one of the five following tests:
(a) Possess at least ten marketed products in the therapeutic category and at least one clinical trial running in that category;
(b) Possess at least twenty marketed products in the therapeutic category;
(c) Possess a ratio of the number of clinical trials in the therapeutic category to all products marketed greater than or equal to .35 to 1, and have at least two clinical trials in progress;
(d) Possess at least five clinical trials in the therapeutic category; or
(e) Possess a ratio of all the number of products sold plus all compounds in clinical trials in the therapeutic category to its entire product universe (either in trail stage or being actively marketed) greater than or equal to .5 to 1.

Item (a) and (b) are designed to demonstrate the "commercial" nexus of the issuer to the relevant therapeutic category. Items (c) and (d) are designed to establish the "research' nexus of the issuer to that category. Item (e) illustrates the "overall intensity and business focus" of the issuer to that category relative to any other therapeutic category effort.

Fifth, issuers with less than $100 million in annual revenues from product sales (based on most recent audited financial statements) must have at least the equivalent of one year's operating costs in cash on its balance sheet.

Sixth, at least 23 issuers must satisfy these inclusion criteria for any one Index. A minimum of 20 component securities will be represented in each Index, with at least three qualifying securities in reserve. The index administrator will determine which securities to be included in each Index. In making such determination, the index administrator will select serially the largest companies by market capitalization for inclusion in the Index.

The following circumstances will result in removal of securities from an Index: bankruptcy of the issuer; delisting of the issuer's securities from all major US and Canadian exchanges; acquisition or merger of the Issuer or the announcement of its acquisition or merger, by or into another company which does not satisfy the inclusion criteria for the Index in which the component security is contained; lack of reasonable liquidity for the security, defined as no trading activity involving the security on a principal exchange within any ten consecutive business day period; and that the security no longer meets the inclusion criteria set forth above.

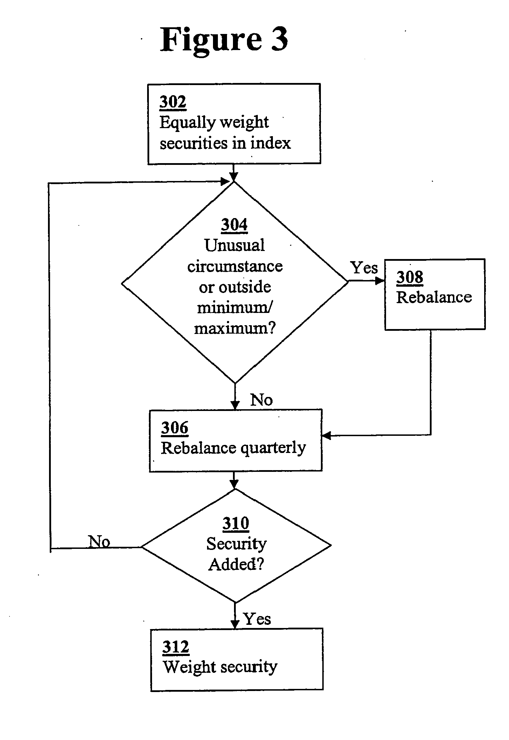

Each Index is created and maintained through a process of weighting and rebalancing, which will be explained with reference to the flow chart of Fig. 3. The general concepts of weighting and rebalancing are known in the art; however, their use in the context of the present invention is deemed to be novel.

At inception, in step 302, the securities in each Index are equally weighted. Weightings are determined using a formula which considers the share price of each individual component security to arrive at an equal dollar value of each component security within the Index. The dollar values of each component security are aggregated and divided by an appropriate divisor to yield the starting value of each Index.

Except in unusual and unexpected circumstances (such as, but not limited to, tender offers, spin-offs, or the acquisition or bankruptcy of the Issuer), or the circumstances to be described below, as determined in step 304, rebalancing is done quarterly in step 306. Rebalancing occurs to reflect changes in the weightings of component securities in each Index resulting from changes in the market price of individual component securities. If one of the circumstances which trigger rebalancing is determined to be present in step 304, rebalancing is performed in step 308 in addition to the quarterly rebalancing.

The maximum weight for a security is 15% of any given Index. If such a weighting is exceeded, the Index will be rebalanced in step 308 to reduce the weighting of the security in question to 10%, with the 5% "excess" applied equally to all the remaining component securities in the Index.

The minimum weight for a security is 2.5% of any given Index. If a security's weighting falls below 2.5%, the Index will be rebalanced in step 308 to increase the weighting of the security in question to its initial weighting or 5%, whichever is less, with the required increment taken equally from all the remaining component securities in the Index.

The following applies to ETF Indices only. All Indices that form the basis for a target index for an exchange-traded fund shall not hold a position in an issuer such that the exchange-traded fund would be required, if it were to replicate the Index, to make filings under Sections 13 or 16 of the Securities Exchange Act of 1934. To avoid such a situation, rebalancing is performed in step 308.

Securities added to an Index after its inception, as determined in step 310, are weighted in step 312 by taking the average Index weighting of the 3 component securities already in the Index that are closest in market capitalization to the security being added to the Index.

Valuation of component securities in an Index is based on the last sale price recorded at the primary exchange on which a security is traded, i.e., the relevant Canadian exchange or the NYSE, AMEX, or NASDAQ. If trading in a component security is suspended or halted, the Index Administrator shall, in good faith, determine the fair value of such security.

The Index Administrator is responsible for Index maintenance, including monitoring and implementing adjustments, additions and deletions, share changes, stock splits, dividends, and stock price adjustments due to restructurings, spin-offs, and other corporate actions.

A Calculation Agent will be responsible for compiling, calculating, maintaining, and disseminating the values of the Indices.

A spin-off is the distribution to existing shareholders of a part of a company's business through the issuance of shares in the newly established company. Both the distributing and newly established company will be evaluated at the next quarterly rebalancing (Fig. 3, step 306) to ensure continued and possibly new compliance with inclusion criteria for an Index.

An Index component that is the subject of a tender offer will ordinarily be removed at the earliest of:

(a) Reasonable evidence (as determined by the Index Administrator or the FW Index Committee) that more than 80% of the total underlying shares have been tendered (or a higher percentage in connection with conditional offers) or are likely to be so tendered;

(b) Delisting from the primary exchange; or

(c) Announcement that the tender offer is mandatory.

The Index Committee may exercise its reasonable judgment to make adjustments to the composition of an Index, whether or not the conditions for inclusion are satisfied, to more accurately reflect the intended focus of a particular Index. In making such determinations, the Index Committee shall seek to ensure the overall consistency of each component security with the character, design, and purpose of each individual Index in an effort to further its use as an effective benchmark.

Unless more frequent reviews are necessitated by security specific events, the Index Administrator shall review and adjust, if necessary, the Index on a quarterly basis. Except as described above, changes in the composition of the Index will be implemented on a quarterly basis, prior to the opening of trading on the first day that the exchanges are open for the subsequent quarter.

Each Index is ordinarily calculated every business day on which the US stock exchanges are open for trading. Each Index will be calculated on a real time basis (i.e., updated values are normally disseminated every fifteen seconds). Each Index is calculated on a price only basis.

At inception, each Index is an equal-weight index, using a formula based upon the aggregate of prices times appropriate share quantities. Standard index algorithms are used for the calculation and are available upon request from the Calculation Agent.

The Index Administrator shall make every effort to ensure the accuracy of the information used for Index calculation. If errors occur, the Index Administrator shall promptly correct such errors as described below.

Intraday - Reasonable efforts are employed to prevent erroneous data from affecting the Indices. Corrections will be made for incorrect prices and incorrect or missing corporate actions as soon as possible after detection.

Incorrect Index value ticks will not be fixed retroactively. Incorrect daily high/low Index values will be corrected as soon as practical.

Index-Related Data and Divisor Corrections - Incorrect pricing and corporate action data for individual issues in the Index will be corrected upon detection. Incorrect Index divisors will be corrected on the day they are discovered.

Data for all Indices will be available on a real time basis to Distribution Agents. It is contemplated that Index data will be available via worldwide market data vendor networks and other print and electronic information vendors. It is also contemplated that the company maintaining the Indices will publish and make available upon request a complete description of each individual Index, computational methodologies, recent changes, and new developments, along with a detailed listing of Index component securities.

While a preferred embodiment of the present invention has been described above in detail, those skilled in the art who have reviewed the present disclosure will readily appreciate that other embodiments can be realized within the scope of the invention. The trading system can use a proprietary network or stand-alone system. Therefore, the present invention should be construed as limited only by the appended claims.

## Claims

1. A system for forming a business development company, the system comprising:
a processor for:
(a) determining a broad sector and subsectors;
(b) devising a rule set;
(c) applying the rule set to produce an index of companies;
(d) publishing the index; and
(e) assembling the business development corporation from the index; and
a communication component, in communication with the processor, for providing communication between the processor and an investor in regard to the business development company.

2. An article of manufacture for forming a business development company, the article of manufacture comprising:
a computer-readable medium; and
code stored on the computer-readable medium, the code, when executed on a computer, controlling the computer to form the investment vehicle by:
(a) determining a broad sector and subsectors;
(b) devising a rule set;
(c) applying the rule set to produce an index of companies;
(d) publishing the index; and
(e) assembling the business development corporation from the index.

3. A method for forming a business development corporation, the method comprising:
(a) determining a broad sector and subsectors;
(b) devising a rule set;
(c) applying the rule set to produce an index of companies;
(d) publishing the index; and
(e) assembling the business development corporation from the index.
